# EUROPÄISCHE PATENTSCHRIFT

(11) **EP 0 655 126 B1**
(45) Veröffentlichungstag und Bekanntmachung des Hinweises auf die Patenterteilung: **05.06.1996**
(21) Anmeldenummer: 93915939.8
(22) Anmeldetag: 17.07.1993
(51) Int. Cl.: G01G 19/415, G07G 1/00

(54) **ELEKTRONISCH PREISRECHNENDE LADENWAAGE**
SHOP SCALES WITH ELECTRONIC PRICE CALCULATION
BALANCE DE COMPTOIR A CALCUL ELECTRONIQUE DES PRIX

(30) Priorität: 12.08.1992 DE 4226645
(43) Veröffentlichungstag der Anmeldung: 31.05.1995
(73) Patentinhaber: Bizerba GmbH & Co. KG, D-72336 Balingen (DE)
(72) Erfinder: KRAFT, Horst, D-72336 Balingen (DE); WURSTER, Klaus, Rudolf, D-72124 Pliezhausen (DE)
(74) Vertreter: Hoeger, Stellrecht & Partner
(86) Internationale Anmeldenummer: EP9301883
(87) Internationale Veröffentlichungsnummer: WO9404891

(56) Entgegenhaltungen:
- EP-A- 0 397 092
- EP-A- 0 443 419
- DE-A- 4 129 234
- GB-A- 2 193 363
- GB-A- 2 217 887
- Seite 179 aus dem Buch 'Kochsiek - Handbuch des Wägens' Braunschweig (DE) 1985

## Beschreibung

Die Erfindung betrifft eine elektronisch preisrechnende Ladenwaage nach dem Oberbegriff des Patentanspruchs 1.

Bekannte Waagen dieser Art (DE-A1-4129234 veröffentlicht 4.3.93) enthalten unter anderem eine elektronische Recheneinrichtung mit Abrufspeicher, eine Anzeigeeinrichtung, eine Eingabe- und Abrufeinrichtung für bestimmte Daten, eine separate, zumeist abdeckbare Programmiertastatur sowie eine größere, übersichtliche Bedientastatur, die mit Bildern der zu wägenden und zu verkaufenden Waren, sogenannten "Piktogrammen" und/oder alphanumerischen Bezeichnungen versehen ist.

Der Preis pro Gewichtseinheit ("Grundpreis") wird für die einzelnen Waren über die Programmiertastatur in den Speicher der elektronischen Recheneinrichtung eingegeben. Jeder Speicherstelle dieses Speichers ist eine Taste der Bedientastatur zugeordnet. Mit diesen Tasten wird der gespeicherte Preis pro Gewichtseinheit einer bestimmten Ware aus dem Speicher abgerufen und mit dem von der Waage ermittelten Gewicht multipliziert, was den Verkaufspreis der Ware ergibt. Dieser wird auf der Anzeigeeinrichtung angezeigt sowie gegebenenfalls auf einem Etikett ausgedruckt.

Je nach Einsatzzweck der Waage und dem Artikel- oder Warenangebot ist eine auswechselbare Artikel- oder Warenkennzeichnung an der Bedientastatur erforderlich.

Nachteile dieser bekannten Waage bestehen darin, daß z. B. die Piktogramme für neue Waren erst aufwendig hergestellt werden müssen, ehe die Ware bildlich auf der Tastatur dargestellt werden kann. Dies führt teilweise dazu, daß eine numerische Warenkennzeichnung vorgezogen wird, was jedoch leicht zu einer vermehrten Falschauszeichnung durch einen die Waage selbst bedienenden Kunden führen kann. Weiter ist es nachteilig, daß ein dem gesamten Warenangebot entsprechendes Sortiment von Piktogrammen bereitgehalten werden muß. Dieses Sortiment ist in der Regel wesentlich größer als das zu einem bestimmten Zeitpunkt aktuelle Warenangebot, da verschiedene Waren nur saisonabhängig angeboten werden können. Darüber hinaus muß beim Einsatz mehrerer Waagen in demselben Ladengeschäft ein entsprechendes Vielfaches an Piktogrammen bereitgehalten werden. Eine Umstellung des Warenangebots, insbesondere wenn mehrere Waagen für den gleichen Zweck eingesetzt werden, ist umständlich und zeitaufwendig.

Ebenso umständlich und zeitaufwendig ist es, eine z. B. auf Kunden-Selbstbedienungsbetrieb eingestellte Waage so umzurüsten, daß sie im sogenannten Bedienverkauf, also bedient von einer Verkaufsperson des Ladengeschäfts eingesetzt werden kann.

Ein weiterer Nachteil der bekannten Waage ergibt sich aus dem an der Waage zur Verfügung stehenden Platz für die Anbringung der Piktogramme bzw. der zugehörigen Tastaturen. Ein vielfältiges Angebot von Waren erfordert häufig weit mehr verschiedenartige Piktogramme für einen gleichzeitigen Einsatz an einer Waage, als an dieser nebeneinander anbringbar sind, selbst wenn ein entsprechender Aufsatz an der Waage verwendet wird.

Werden bei der bekannten Waage zur Hervorhebung bestimmter Waren oder bei Sonderangeboten unterschiedlich große Betätigungselemente eingesetzt, so ist die bei derartigen Tastaturen zum besseren Erkennen und Auffinden zweckmäßige zusätzliche Durchnumerierung der einzelnen Betätigungselemente (Tasten) umständlich und zeitaufwendig, da die Betätigungselemente selbst oder die darüber angeordnete Beschriftungsfolie erst fortlaufend durchnumeriert werden kann, wenn die Tastur komplett bestückt ist. Mit anderen Worten ist eine rationalle Vorabnumerierung, z. B. durch Siebdruck aufgrund der vorher nicht bekannten Plazierung der Betätigungselemente nicht möglich, da die Plazierung und Auswahl der Piktogramme vom jeweiligen Warensortiment abhängig ist.

Stehen in einem größeren Ladengeschäft (Verkaufsmarkt) mehrere gleichartige Waagen, muß bei einem Wechsel des Warensortiments außerdem jede Waage einzeln manuell mit den neuen Piktogrammen und/oder alphanumerischen Bezeichnungen ausgestattet werden.

Es ist Aufgabe der Erfindung, eine gattungsgemäße Ladenwaage so auszugestalten, daß unter Vermeidung der voranstehenden Nachteile insbesondere die Warenkennzeichnung in Form von Piktogrammen und/oder alphanumerischen Bezeichnungen dem jeweiligen Warenangebot, und die Waage selbst dem jeweiligen Einsatzzweck, z. B. Selbstbedienung oder Bedienverkauf schnell und einfach angepaßt werden kann.

Die Aufgabe wird bei einer gattungsgemäßen Ladenwaage erfindungsgemäß durch die kennzeichnenden Merkmale des Patentanspruchs 1 gelöst.

Weitere Ausführungsformen der Erfindung sind Gegenstand der abhängigen Ansprüche 2 bis 9.

Auf dem Bildschirm der Waage können die Warenbilder und/oder alphanumerischen Bezeichnungen der Waren in beliebiger, unterschiedlicher und von Zeit zu Zeit wechselnder Größe, Anzahl und Lage angezeigt werden. Des weiteren können auf dem Bildschirm auch die üblichen Verkaufsdaten, wie z. B. Verkaufspreis, Grundpreis, Gewicht, Warenbezeichnung dargestellt werden, des weiteren eine Bedientastatur. Darüber hinaus kann der Bildschirm in verkaufsfreien Zeitabschnitten für Werbezwecke, Kundeninformationen oder dergleichen ausgenutzt werden.

Sowohl die Bilddaten in digitalisierter Form als auch die Verkaufsdaten, ebenfalls in digitalisierter Form, sind in einem Abrufspeicher abgelegt. Dieser Abrufspeicher wiederum erhält seine Daten in herkömmlicher Weise über eine externe Bilderfassungseinrichtung, eine übergeordnete elektrische Datenverarbeitungseinrichtung, aus dem Datenbestand einer anderen Einzelwaage oder einem Waagenverbund, oder auch über Eingaben, die direkt an der betreffenden Ladenwaage gemacht werden.

Die nachstehende Beschreibung bevorzugter Ausführungsformen der Erfindung dient im Zusammenhang mit beiliegender Zeichnung der weiteren Erläuterung. Es zeigen:
- Figur 1: eine schaubildliche Gesamtansicht einer Ladenwaage mit Bildschirm sowie Eingabeund Abrufeinrichtung;
- Figur 2: ein Blockschaltbild der Ladenwaage aus Figur 1;
- Figur 3: die Zuordnung von Bildschirmausschnitten (Tastenfelder) zu Schaltflächen der Eingabe- und Abrufeinrichtung;
- Figur 4: eine Tastatur-Anordnung auf dem Bildschirm mit Bildern von Waren, alphanumerischen Bezeichnungen der Waren und anderen wägetechnischen, warenbezogenen Verkaufsdaten;
- Figur 5: einen Bildschirm mit Bildern von Waren, anderen warenbezogenen Verkaufsdaten und Bedientastatur;
- Figur 6: eine Bedieneinheit mit einer in einen Bildschirm integrierten Tastatur samt Anzeige sowie mit einer separaten, herkömmlichen Bedientastatur;
- Figur 7: eine Bedieneinheit mit einer in einen Bildschirm integrierten Tastatur, einer separaten Anzeigeeinrichtung sowie einer separaten, herkömmlichen Bedientastatur;
- Figur 8a/8b: zwei Ebenen (Layer) einer Bildschirm-Tastatur mit Anzeige für eine Warenanwahl;
- Figur 9: einen Bildschirm mit Werbedarstellung und
- Figur 10: eine Bildschirm-Tastatur mit fortlaufender Numerierung bei Verwendung unterschiedlich großer Tastenfelder mit Bildern von Waren.

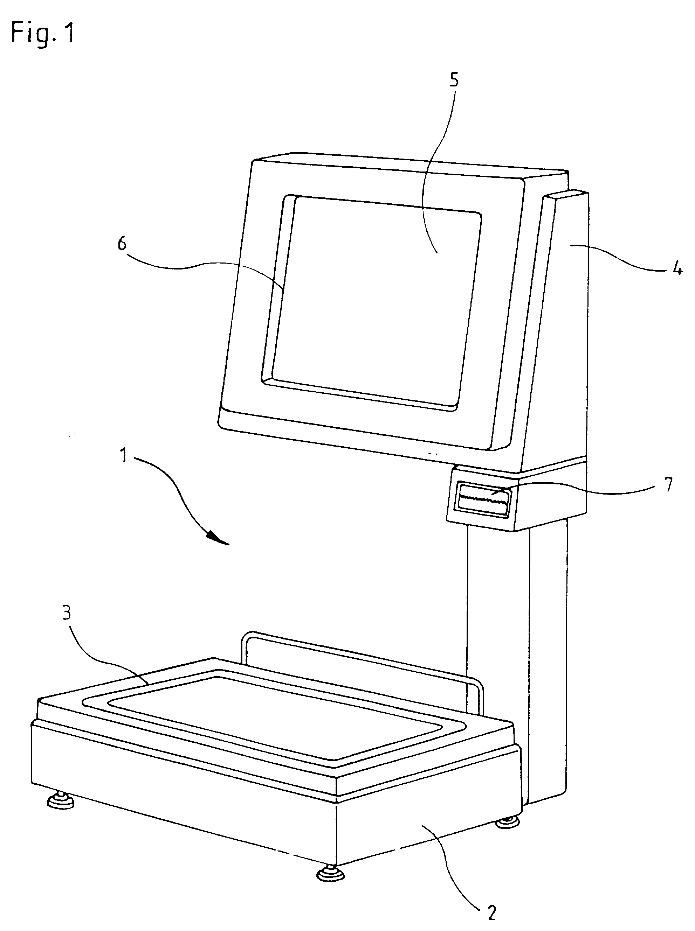

Eine in Figur 1 dargestellte, elektronisch preisrechnende Ladenwaage 1 für Waren zur wahlweisen Bedienung durch einen Kunden oder Bedienung durch eine Verkaufsperson in einem Ladengeschäft umfaßt im wesentlichen eine auf einem Waagengestell 2 angeordnete Wägeplatte 3 zur Aufnahme einer zu wägenden Ware sowie eine auf einem Ständer erhöht angeordnete Anzeige- und Bedienungseinrichtung 4 mit Bildschirm 5 und (nicht dargestellter) Recheneinrichtung, eine vor dem Bildschirm angeordnete Eingabe- und Abrufeinrichtung 6 sowie eine Ausgabeöffnung 7 zur Ausgabe eines Bons oder Etiketts, auf welche die üblichen Verkaufsdaten, wie Grundpreis, Gewicht, Gesamtpreis usw. aufgedruckt sind.

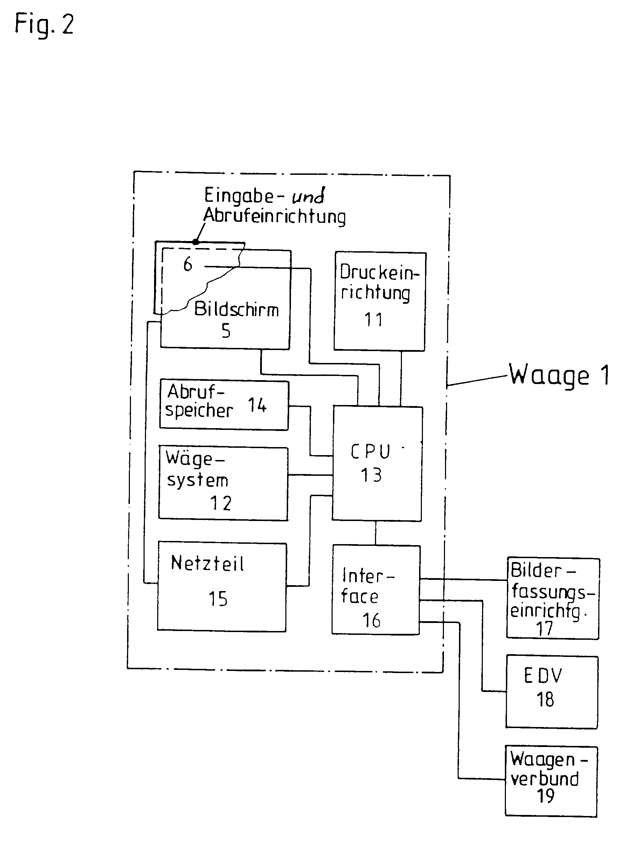

Figur 2 zeigt ein Blockschaltbild mit dem funktionellen Aufbau der Waage 1. Unter der Wägeplatte 3 liegt das Wägesystem 12. Dieses in an sich bekannter Weise ausgeführte Wägesystem 12 liefert beim Auflegen einer Ware auf die Wägeplatte 3 einen digitalen Gewichtswert an eine zentrale Recheneinheit (CPU) 13, in der dieser Wert mit einem vom Benutzer über den Bildschirm 5 und die Eingabe- und Abrufeinrichtung 6 angewählten Grundpreis, welcher aus einem Abrufspeicher 14 abgerufen wird, multipliziert und anschließend auf dem Bildschirm 5 als Verkaufspreis zusammen mit anderen Daten angezeigt wird, wobei zugleich über eine Druckeinrichtung 11 ein bedruckter Bon oder ein bedrucktes Etikett erstellt und über die Ausgabeöffnung 7 ausgegeben werden kann.

Das Blockschaltbild in Figur 2 zeigt ferner einen Netzteil 15 zur Spannungsversorgung des Bildschirms 5 und der Recheneinheit 13 sowie eine Schnittstellen-Einrichtung 16 ("interface") zum Anschluß externer, später noch zu beschreibender Einrichtungen.

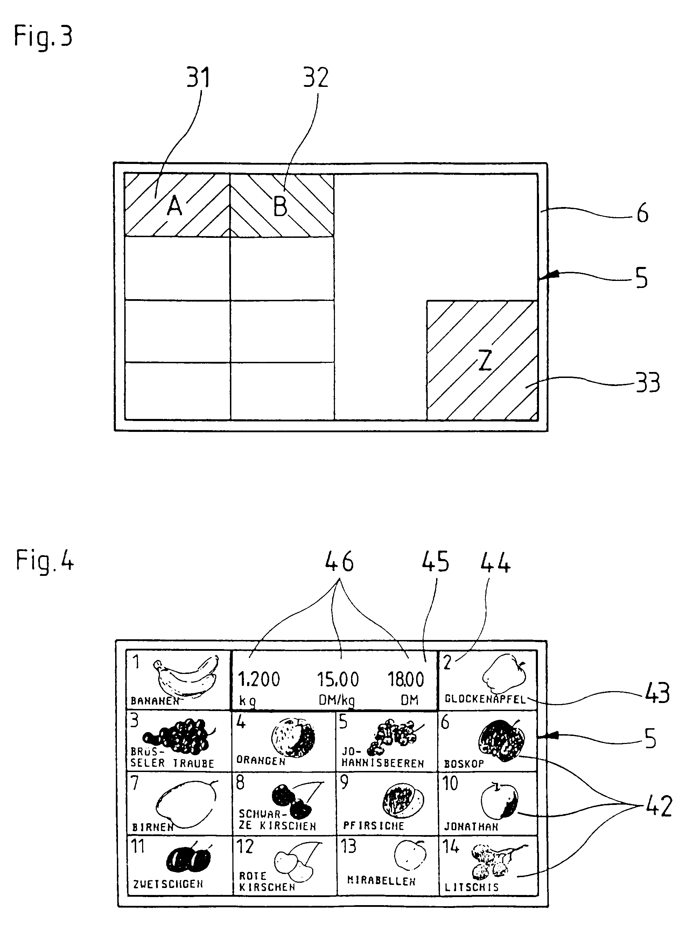

Die auf dem Bildschirm 5 anzeigbaren Bilder 42 von zu wägenden Waren und/oder deren alphanumerische Bezeichnungen 43, 44 (Figur 4) sind in Form digitalisierter Daten auf handelsüblichen Datenträgern im Abrufspeicher 14 abgelegt. Mit Hilfe einer nicht dargestellten, logischen, elektronischen Schaltung der Recheneinheit 13 sind diese Daten zugleich mit den in der Einheit 13 gespeicherten, zugehörigen Verkaufsdaten 46, wie z. B. Grundpreis, Tarawert, Zutaten usw. verknüpft.

Die erstmalige Eingabe der digitalisierten Daten in den Speicher 14 erfolgt in an sich bekannter Weise über eine externe Bilderfassungseinrichtung 17, z. B. einen Scanner, oder eine Videokamera, und die Schnittstelleinrichtung 16 mittels der Verknüpfungslogik der Recheneinheit 13.

In gleicher Weise können diese Bilder 42 der Waren und andere Daten, z. B. von einer übergeordneten, waagenexternen zentralen elektronischen Datenverarbeitungseinrichtung 18 oder aus anderen Waagen über einen Waagenverbund 19 in die Waage 1 eingespielt werden; damit ist z. B. eine zentrale, übergeordnete Programmierung der Waage 1 möglich.

Figur 3 zeigt die Zuordnung des Bildschirmes 5 zur Eingabe- und Abrufeinrichtung 6. Schraffierte Schaltflächen 31, 32 und 33 der Eingabe- und Abrufeinrichtung 6 entsprechen nach Größe und Lage den beliebig wählbaren Bildschirmausschnitten oder Tastenfeldern A, B und Z, so daß beim Betätigen (z. B. Berühren) der jeweiligen Schaltflächen 31, 32 oder 33 die zu dem jeweiligen Bildschirmausschnitt gehörenden und abgespeicherten Daten aus dem Abrufspeicher 14 oder den damit verknüpften, in der Recheneinheit 13 gespeicherten Verkaufsdaten abgerufen und die entsprechenden Funktionen ausgelöst werden.

Die Eingabe- und Abrufeinrichtung 6 könnte z. B. ein an sich bekanntes, vor dem Bildschirm angeordnetes oder in dessen vorderster Schicht integriertes, sogenanntes "Touch-Screen-System" sein. Hierbei werden Schaltfunktionen durch Zusammendrücken von zwei auf Abstand gehaltenen Klarsichtfolien mit transparenten Leiterbahnen, die eine Schaltmatrix bilden, ausgelöst.

Die Eingabe- und Abrufeinrichtung 6 besteht aber in an sich bekannter Weise auch aus einer Infrarot-Einrichtung mit Sender und Empfänger, bei welcher durch Unterbrechen der Infrarotstrahlen eine Schaltfunktion ausgelöst wird, oder auch aus einer Ultraschall-Einrichtung, bei der durch Stören der Ultraschallausstrahlung eine Reflexion ausgelöst wird, welche wiederum eine Schaltfunktion auslöst.

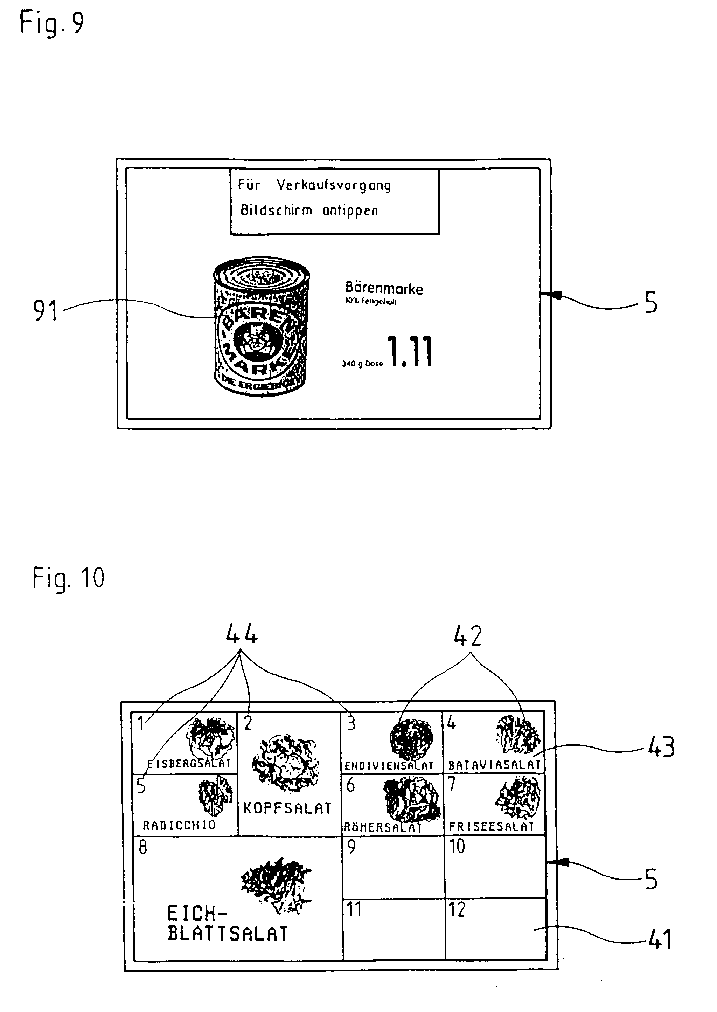

Figur 4 zeigt den Bildschirm 5 mit darauf in Einzeltastenflächen 41 angeordneten Warenbildern 42 samt Warenbezeichnungen 43 und fortlaufenden Nummern 44 zusammen mit einem separaten Anzeigefeld 45 für wägetechnische, warenbezogene Verkaufsdaten 46, wie z. B. Gewicht, Grundpreis, Verkaufspreis usw., die für den Bediener übersichtlich für den jeweiligen Wäge- und Verkaufsvorgang dargestellt sind. Nach dem Abschluß eines Wäge- und Verkaufsvorganges kann die Darstellung im Feld 45 automatisch nach voreingestellter Zeit in einen anderen Anzeigemodus wechseln, z. B. entsprechend Figur 9. Wird anschließend wieder eine Schaltfläche 31, 32 oder 33 berührt, wechselt das Anzeigebild erneut auf eine Darstellung entsprechend Figur 4 zurück.

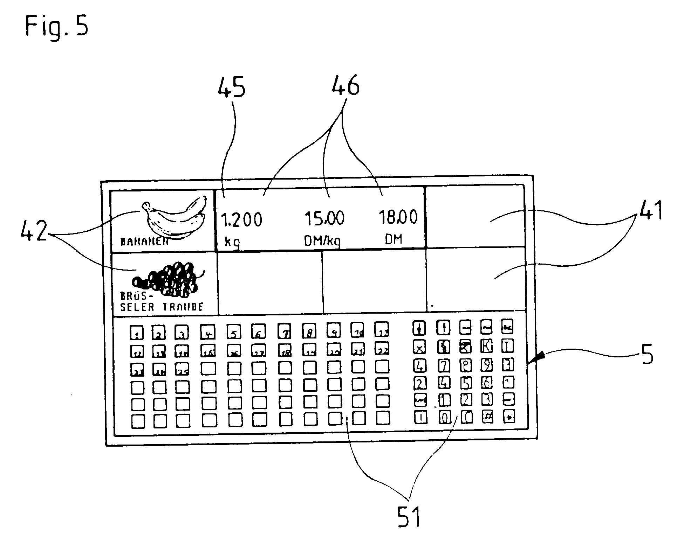

Figur 5 zeigt eine Darstellung des Bildschirms 5 mit Einzeltastenflächen 41 und Warenbildern 42, sowie einem separaten Anzeigenfeld 45 mit wägetechnischen, warenbezogenen Verkaufsdaten (Grundpreis usw. wie in Figur 4) und mit einer kompletten, ebenfalls in den Bildschirm 5 integrierten Bedientastatur 51. Diese Anordnung wird vorzugsweise dann angewandt, wenn die Waage im Bedienverkauf eingesetzt wird, also dann, wenn ein Kunde sich nicht selbst bedient, sondern von einer im Ladengeschäft angestellten Verkaufsperson bedient wird. Diese Anordnung bietet der Bedienungsperson den Vorteil, daß auf dem Bildschirm 5 die am häufigsten vorkommenden Warenbilder 42 ständig angezeigt und somit mit einer einzigen Betätigung angewählt werden können, während andere Verkaufsvorgänge in bekannter Weise über die Bedientastatur 51 abgewickelt werden müssen.

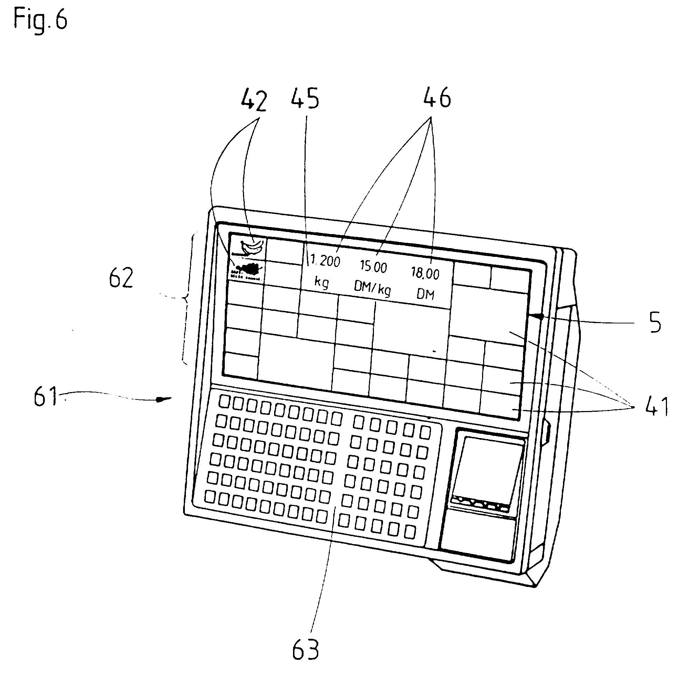

Figur 6 zeigt eine Bedieneinheit 61 mit einem Bildschirm 5, in dessen Fläche ein Tastenfeld 62 sowie ein separates Anzeigefeld 45 für wägetechnische, warenbezogene Verkaufsdaten 46 integriert sind. Das Tastenfeld 62 weist Einzeltastenflächen 41 mit Warenbildern 42 auf. Weiterhin ist separat und zusätzlich eine herkömmliche, nicht in den Bildschirm 5 integrierte Bedientastatur 63 vorgesehen. Hierbei weisen die Einzeltastenflächen 41 unterschiedliche Größen in beliebiger Lage innerhalb des Tastenfeldes 62 auf, um im speziellen Fall vergrößerte und dadurch bestimmte Waren hervorhebende Tastenflächen zu erhalten. Die Ausführung gemäß Figur 6 wird ähnlich der in Figur 5 beschriebenen Ausführungsform vorzugsweise im Bedienverkauf eingesetzt. Sie hat gegenüber dem dort beschriebenen Beispiel den Vorteil, daß eine größere Anzahl von Bildern 42 häufig vorkommender Waren ständig angezeigt werden könne, und daß als Bedientastatur 63 beispielsweise eine konventionelle Tastatur mit Hubtasten eingesetzt werden kann.

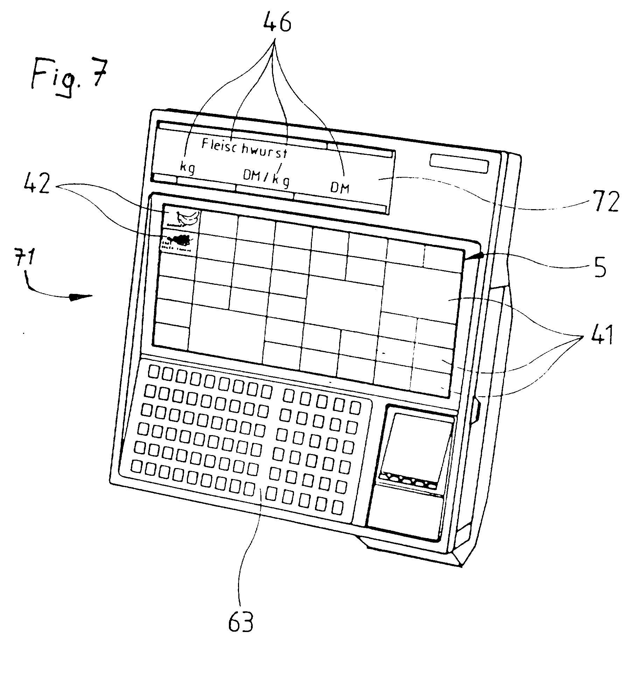

Figur 7 zeigt eine Bedieneinheit 71 mit einem Bildschirm 5, der nur in Einzeltastenflächen 41 unterteilt ist und zur Anzeige von Warenbildern 42 dient. Zusätzlich ist eine herkömmliche Anzeigeeinrichtung 72 für wägetechnische, warenbezogene Verkaufsdaten 46 (z. B. Grundpreis, usw.) vorgesehen, sowie eine separate, herkömmliche Bedientastatur 63, wie im Zusammenhang mit Figur 6 beschrieben. Diese Ausführungsform wird, ähnlich wie diejenige in Figur 5 und 6 dargestellte Ausführungsform, vorzugsweise im Bedienverkauf eingesetzt, wenn eine noch größere Anzahl von Tastenfeldern bzw. Warenbildern erforderlich ist.

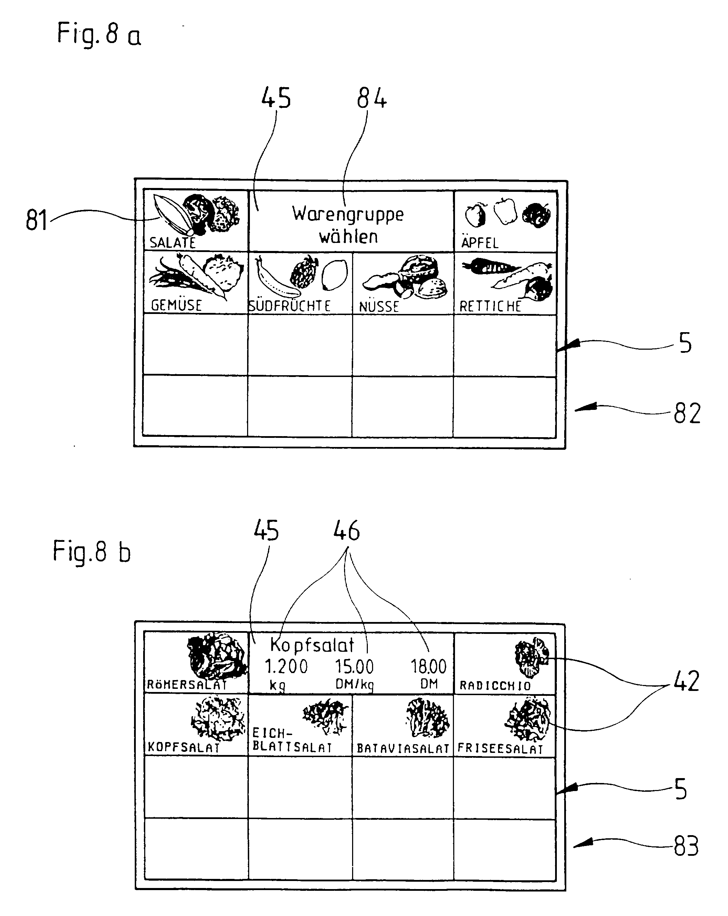

Die Figuren 8a und 8b zeigen die Anwendung der an sich bekannten sogenannten "Layer-Technik" (Zwei-Ebenen-Technik) bei einer Bildschirm-Tastatur gemäß der vorstehend beschriebenen Art, insbesondere bei der Anwahl gewünschter Waren. Hierzu ist eine nicht dargestellte, ebenfalls an sich bekannte elektronische Schaltung so ausgeführt, daß nach dem Anwählen einer Warengruppenabbildung 81 auf dem Bildschirm 5 innerhalb einer ersten Ebene bzw. einer ersten "Layer" 82 gemäß Figur 8a auf eine zweite Ebene bzw. eine zweite Layer 83 gemäß Figur 8b, oder bei Bedarf oder feinerer Unterteilung auf weitere Ebenen oder Layers umgeschaltet wird, in denen dann die Einzelwaren 42 der betreffenden Warengruppe abgebildet werden. Dies ermöglicht, auf der vorhandenen Anzeigefläche eine Vielzahl von Warengruppenbildern und/oder alphanumerischen Bezeichnungen 81 sowie Einzelwaren 42 darzustellen. In Figur 8a sind z. B. auf der ersten Layer Warengruppenbilder, wie z. B. Gemüse, Salat, Nüsse usw. dargestellt, während auf der zweiten Layer (Figur 8b) alle zur jeweiligen Warengruppe gehörenden Einzelwaren, also z. B. alle verschiedenen Salatarten der Gruppe Salat angezeigt werden.

Nach Abschluß eines Wäge- und Verkaufsvorganges wechselt das Anzeigebild auf dem Schirm 5 wieder automatisch in die Anzeige entsprechend der ersten Layer 82 zurück.

In dem Anzeigefeld 45 können zusätzlich layerabhängig z. B. Bedienungshinweise 84 oder wägetechnische, warenbezogene Verkaufsdaten 46 angezeigt werden.

In verkaufsfreien Zeitperioden kann der Bildschirm 5 für Werbezwecke benutzt werden, wie in Figur 9 dargestellt. Hierzu kann nach einer voreingestellten Zeit die Waage selbsttätig von z. B. Selbstbedienungsverkauf in einen Werbemodus 91 umschalten. Sobald die Wägeplatte 3 wieder mit einer Ware belastet wird oder der Bildschirm 5 berührt wird, schaltet die Waage wieder in den Modus des Selbstbedienungsverkaufs zurück.

In Figur 10 sind unterschiedlich große Einzeltastenfelder 41 und Warenbilder 42 mit Warenbezeichnungen 43 unabhängig von ihrer Größe fortlaufend mit Nummern 44 versehen. Diese fortlaufenden Nummern 44 sind neben dem Warenbild 42 bzw. der Warenbezeichnung 43 ein wichtiges Suchkriterium für einen Kunden. Die Vergabe und Plazierung solcher fortlaufender Nummern 44 kann über die verwendete Software schnell und einfach mit einem Programmier-Befehl ausgeführt werden.

## Patentansprüche

1. Elektronisch preisrechnende Ladenwaage für Waren zur wahlweisen Bedienung durch einen Kunden oder durch
eine Verkaufsperson in einem Ladengeschäft mit einer Recheneinrichtung, einem Bildschirm (5) als Anzeigeeinrichtung, einer dem Bildschirm zugeordneten Eingabe- und Abrufeinrichtung, einem Abrufspeicher für warenbezogene Daten und einer logischen elektronischen Schaltung zwischen der Eingabe- und Abrufeinrichtung und dem Abrufspeicher, wobei auf dem Bildschirm Bilder der Waren und/oder warenbezogene alphanumerische Bezeichnungen darstellbar sind, die durch Betätigen der Eingabe- und Abrufeinrichtung aus dem Abrufspeicher abrufbar sind,
**dadurch gekennzeichnet, daß**
die Bilder (42) der Waren und/oder warenbezogenen alpha numerischen Bezeichnungen auf dem Bildschirm (5) in Einzeltastenflächen (41) unterschiedlicher Größe, Anzahl und Anordnung anzeigbar sind und die Eingabe- und Abrufeinrichtung (6) als eine vor dem Bildschirm (5) angeordnete, auf Abstrahlung beruhende Einrichtung, nämlich als eine Ultraschall- oder eine Ultraroteinrichtung ausgebildet ist, bei welcher durch Störung bzw. Unterbrechung der Strahlung eine Schaltfunktion auslösbar ist.

2. Waage nach Anspruch 1, dadurch gekennzeichnet, daß auf dem Bildschirm (5) außer den Warenbildern (42) und wägetechnischen, artikelbezogenen Verkaufsdaten (33, 44, 46) eine aus einer alphanumerischen und einer Zehnertastatur kombinierte Bedientastatur (51) für die Bedienung durch eine Verkaufsperson darstellbar ist.

3. Waage nach Anspruch 1, dadurch gekennzeichnet, daß der Bildschirm (5) nur zur Anzeige von Warenbildern (42) dient und jeweils eine herkömmliche separate Anzeigeeinrichtung (72) für wägetechnische, warenbezogene Verkaufsdaten (46) sowie eine zusätzliche, separate herkömmliche Bedientastatur (63) vorgesehen sind.

4. Waage nach Anspruch 1, dadurch gekennzeichnet, daß mit Hilfe eines Programmierbefehls eine fortlaufende Numerierung unterschiedlich großer Warenbilder (42) mit Nummern (44) ausführbar ist.

5. Waage nach Anspruch 1, dadurch gekennzeichnet, daß der Bildschirm (5) für Werbedarstellungen (91) nutzbar ist.

6. Waage nach Anspruch 1, dadurch gekennzeichnet, daß am Bildschirm (5) Schaltflächen (31, 32, 33) der Eingabe- und Abrufeinrichtung (6) nach Größe und Lage beliebig wählbaren Bildausschnitten (A, B, Z) mit den jeweiligen Warenbildern (42) entsprechen, so daß bei Betätigen der jeweiligen Schaltflächen (31, 32, 33) im Bereich des zugehörigen Warenbildes (42) lediglich die zu diesem Bild gehörende Daten abrufbar und/oder die entsprechenden Funktionen auslösbar sind.

7. Waage nach Anspruch 1, dadurch gekennzeichnet, daß der Bildschirm (5) nur zur Anzeige von wägetechnischen und sonstigen warenbezogenen Verkaufsdaten (43, 44, 45, 46) in Verbindung mit Warenbildern (42) dient und an ihm eine zusätzliche, separate, herkömmliche Bedientastatur vorgesehen ist.

8. Waage nach Anspruch 1, dadurch gekennzeichnet, daß eine logische, elektronische Schaltung vorgesehen ist, in der durch Anwählen einer Warengruppen-Abbildung (81) innerhalb einer ersten Ebene (82) des Bildschirms (5) auf wenigstens eine weitere Ebene (83) umschaltbar ist, in der die Warenbilder (42) der betreffenden Warengruppe (81) sowie gegebenenfalls weitere Daten abbildbar sind.

9. Waage nach Anspruch 1, dadurch gekennzeichnet, daß Warenbilder (42) und andere alphanumerische Daten der Waren, insbesondere Warenbezeichnungen (43), fortlaufende Nummern (44), wägetechnische, warenbezogene Verkaufsdaten (46) und Bedienungshinweise (84) von einer übergeordneten, waagenexternen zentralen elektronischen Datenverarbeitungseinrichtung (18) oder aus anderen Waagen über einen Waagenverbund (19) auf beliebige Waagen übertragbar sind.

## Claims

1. An electronically price-calculating shop scales for goods for optional operation by a customer or by a sales person in a shop having an arithmetic unit, a screen (5) as a display device, an input and fetching device associated with the screen, a fetching memory for goods-related data and a logic electronic circuit between the input and fetching device and the fetching memory, whereby images of the goods and/or goods-related alphanumeric designations can be represented on the screen, which can be fetched from the fetching memory by operating the input and fetching device,
**characterised in that** the pictures (42) of the goods and/or goods-related alphanumeric designations can be displayed on the screen (5) in individual key areas (41), for which the size, number and arrangement varies, and the input and fetching device (6) is constructed as a device disposed in front of the screen (5) and conditioned by radiation, i.e. as an ultrasound or an infrared device in which a switching function can be triggered by disturbing or respectively interrupting the radiation.

2. Scales according to Claim 1,
**characterised in that** a control keypad (51) which is a combination of an alphanumeric and a numeric keypad for operation by a sales person can be represented on the screen (5) apart from the pictures of goods (42) and weight-related, goods-related sales data (33, 44, 46).

3. Scales according to Claim 1,
**characterised in that** the screen (5) only serves to display pictures of goods (42) and in each case a conventional separate display device (72) for weight-related, goods-related sales data (46) and also an additional, separate, conventional control keypad (63) are provided.

4. Scales according to Claim 1,
**characterised in that** serial numbering of pictures of goods (42) of different sizes with numbers (44) can be performed by means of a programming command.

5. Scales according to Claim 1,
**characterised in that** the screen (5) can be used for advertising representations (91).

6. Scales according to Claim 1,
**characterised in that,** at the screen, control areas (31, 32, 33) of the input and fetching device (6) correspond with respect to size and position to display sections (A, B, Z) which can be selected at random and have the respective pictures of goods (42) so that, when the respective control areas (31, 32, 33) are actuated in the region of the associated picture of goods (42), only the data belonging to this picture can be fetched and/or the corresponding functions can be triggered.

7. Scales according to Claim 1,
**characterised in that** the screen (5) only serves to display weight-related and other goods-related sales data (43, 44, 45, 46) in conjunction with pictures of goods (42) and at said screen an additional separate conventional control keypad is provided.

8. Scales according to Claim 1,
**characterised in that** a logic, electronic circuit is provided, in which by selecting an image of a group of goods (81) inside a first plane (82) of the screen (5) one can switch to at least one further plane (83), in which the pictures of the goods (42) of the respective group of goods (81) and also, where appropriate, further data can be represented.

9. Scales according to Claim 1,
**characterised in that** pictures of goods (42) and other alphanumeric data on the goods, in particular goods' designations (43), serial numbers (44), weight-related and goods-related sales data (46) and operating instructions (84) can be transmitted to any other scales from an overriding, central electronic data processing device (18) outside the scales or from other scales via a scales connection (19).

## Revendications

1. Balance de comptoir à calcul électronique des prix, pour des marchandises, à utiliser au choix par un client ou par un vendeur dans un magasin, comportant un dispositif de calcul, un écran (5) comme dispositif d'affichage, un dispositif d'entrée et d'interrogation associé à l'écran, une mémoire interrogeable pour des données relatives aux marchandises et un circuit logique électronique entre le dispositif d'entrée et d'interrogation et la mémoire interrogeable, des images des marchandises et/ou des désignations alphanumériques relatives aux marchandises pouvant être représentées sur l'écran, et pouvant être appelées dans la mémoire interrogeable en actionnant le dispositif d'entrée et d'interrogation, caractérisée en ce que les images (42) des marchandises et/ou les désignations alphanumériques relatives aux marchandises peuvent être affichées dans des surfaces tactiles individuelles (41) de dimensions, nombre et disposition variables, et le dispositif d'entrée et d'interrogation (6) est réalisé sous la forme d'un dispositif fondé sur le rayonnement disposé devant l'écran (5), à savoir un dispositif à ultrason ou à infrarouge, selon lequel une fonction de commutation peut être déclenchée par perturbation ou interruption du rayonnement.

2. Balance selon la revendication 1, caractérisée en ce qu'en plus des images de marchandises (42) et de données de vente (33, 44, 46) concernant la technique de pesage et relatives aux articles, un clavier de commande combiné (51), comprenant un clavier alphanumérique et un clavier numérique, peut être représenté sur l'écran (5) pour l'utilisation par un vendeur.

3. Balance selon la revendication 1, caractérisée en ce que l'écran (5) sert uniquement à l'affichage d'images de marchandises (42), et un dispositif d'affichage classique séparé (72) pour des données de vente (46) concernant la technique de pesage et relatives aux marchandises, ainsi qu'un clavier de commande classique séparé supplémentaire (63), sont respectivement prévus.

4. Balance selon la revendication 1, caractérisée en ce qu'à l'aide d'une instruction de programme, on peut effectuer une numérotation consécutive, avec des numéros (44), d'images de marchandises (42) de différentes dimensions.

5. Balance selon la revendication 1, caractérisée en ce que l'écran (5) peut être utilisé pour y représenter des publicités (91).

6. Balance selon la revendication 1, caractérisée en ce que des surfaces de commutation (31, 32, 33) du dispositif d'entrée et d'interrogation (6) correspondent sur l'écran (5) à des parties d'écran (A, B, Z) dont les dimensions et la position peuvent être choisies à volonté et qui sont pourvues d'images de marchandises (42) respectives, de sorte qu'en actionnant la surface de commutation respective (31, 32, 33) dans la région de l'image de marchandise (42) associée, seules peuvent être appelées les données appartenant à cette image et/ou seules peuvent être déclenchées les fonctions correspondantes.

7. Balance selon la revendication 1, caractérisée en ce que l'écran (5) sert uniquement à l'affichage de données de vente concernant la technique de pesage et autres données de vente relatives aux marchandises (43, 44, 45, 46) conjointement avec des images de marchandises (42), et un clavier de commande classique séparé supplémentaire est prévu sur lui.

8. Balance selon la revendication 1, caractérisée en ce qu'il est prévu un circuit logique électronique selon lequel, en choisissant une image de groupe de marchandises (81) dans un premier plan (82) de l'écran (5), on peut passer à au moins un autre plan (83) dans lequel peuvent être représentées les images (42) des marchandises du groupe concerné de marchandises (81), ainsi éventuellement que des données supplémentaires.

9. Balance selon la revendication 1, caractérisée en ce que des images de marchandises (42) et d'autres données alphanumériques relatives aux marchandises, notamment des désignations de marchandises (43), des numéros consécutifs (44), des données de vente (46) concernant la technique de pesage et relatives aux marchandises, et des instructions d'utilisation (84), peuvent être transférées à des balances quelconques par un dispositif électronique central supérieur de traitement des données (18) externe aux balances, ou à partir d'autres balances par l'intermédiaire d'une liaison (19) entre balances.
